# EUROPÄISCHE PATENTSCHRIFT

(11) **EP 3 011 547 B1**
(45) Veröffentlichungstag und Bekanntmachung des Hinweises auf die Patenterteilung: **11.07.2018**
(21) Anmeldenummer: 14723828.1
(22) Anmeldetag: 15.05.2014
(51) Int. Cl.: G08G 1/16

(54) **VERFAHREN UND VORRICHTUNG ZUR VERMEIDUNG EINER MÖGLICHEN FOLGEKOLLISION BZW. ZUR VERRINGERUNG DER UNFALLFOLGEN EINER KOLLISION**
METHOD AND DEVICE FOR AVOIDING A POSSIBLE SUBSEQUENT COLLISION AND FOR REDUCING THE CONSEQUENCES OF AN ACCIDENT RESULTING FROM A COLLISION
PROCÉDÉ ET DISPOSITIF POUR ÉVITER UNE ÉVENTUELLE COLLISION EN CHAÎNE OU POUR DIMINUER LES SUITES D'UNE COLLISION

(30) Priorität: 20.06.2013 DE 102013211651
(43) Veröffentlichungstag der Anmeldung: 27.04.2016
(73) Patentinhaber: Robert Bosch GmbH, 70442 Stuttgart (DE)
(72) Erfinder: EISELE, Sybille, 74394 Hessigheim (DE); WILHELM, Ulf, 71277 Rutesheim (DE)
(86) Internationale Anmeldenummer: PCT/EP2014/059924
(87) Internationale Veröffentlichungsnummer: WO 2014/202289

(56) Entgegenhaltungen:
- WO-A1-2004/110809
- US-A1- 2007 032 943
- US-A1- 2009 299 578
- US-A1- 2012 004 819

## Beschreibung

Die vorliegende Erfindung betrifft ein Verfahren und eine Vorrichtung zur Vermeidung einer möglichen Folgekollision bzw. zur Verringerung der Unfallfolgen einer Kollision, bei dem nach erfolgter Erstkollision des Fahrzeugs mit einem weiteren Verkehrsteilnehmer ein automatischer Bremseingriff durch ein Fahrzeugsicherheitssystem gemäß einem Bremsmodell gelöst wird, indem aus dem eigenen Fahrverhalten Fahrzeugdaten ermittelt werden, die ermittelten Fahrzeugdaten in einem Speicher zwischengespeichert werden, aus den zwischengespeicherten Fahrzeugdaten auf die Kategorie der momentan befahrenen Straße geschlossen wird, in Abhängigkeit der bestimmten Straßenkategorie ein Initialabstand bestimmt wird und die Lösebedingung der Bremse unter Verwendung dieses Initalabstands ermittelt wird.

### Stand der Technik

Aus der DE 10 2007 019 991 A1 ist ein Verfahren zur Vermeidung eines Auffahrunfalls nach Auslösen eines automatischen Bremseingriffs durch ein Fahrzeugsicherheitssystem bekannt. Dabei kann die Gefahr und die Schwere eines möglichen Auffahrunfalls durch ein nachfolgendes Fahrzeug erheblich verringert werden, wenn ein Modell für die Annäherung eines hypothetischen Fahrzeugs verwendet wird. Im Rahmen dieses Modells wird eine Bedingung für das Lösen der Bremse ermittelt, sowie bei Eintritt der Bedingung die Bremse wenigstens teilweise gelöst. Dabei wird der Zeitpunkt für das Lösen der Bremse bestimmt, wobei hierzu insbesondere ein anfänglicher Abstand und ein theoretisch angenommenes Verhalten eines hypothetischen Folgefahrzeugs angenommen werden. Die Lösebedingung für die Bremse des vorderen Fahrzeugs ist dabei vorzugsweise abhängig vom angenommenen initialen Abstand des nachfolgenden Fahrzeugs zum eigenen Fahrzeug, wobei sich der initiale Abstand des Folgefahrzeugs beispielsweise aus der Faustregel "halber Tacho" oder einem beliebigen Vielfachen der Eigengeschwindigkeit ergibt. Das Dokument US2012004819 offenbart ein Assistenzsystem, das nach einer Erstkollision die Bremsen vorbereitet, um nach Detektieren einer geplanten Bremsung durch den Fahrer, eine spezielle Bremsassistenz zu leisten, die nach Eintreten einer Abbruchbedingung beendet wird.

### Offenbarung der Erfindung

Der Kern der vorliegenden Erfindung ist es, ein Verfahren und eine Vorrichtung zur Vermeidung einer möglichen Folgekollision bzw. zur Verringerung der Unfallfolgen einer Kollision anzugeben, indem nach erfolgter Erstkollision des Fahrzeugs mit einem weiteren Verkehrsteilnehmer ein automatischer Bremseingriff durch ein Fahrzeugsicherheitssystem gemäß einem Bremsmodell gelöst wird. Automatische Notbremssysteme, die bei Erkennen einer Kollisionssituation eine Fahrzeugverzögerung automatisch auslösen und gegebenenfalls durchführen, setzen sich am Markt immer weiter durch. Dabei kann die Kollisionsgefahr bzw. die erwartete Kollisionsschwere für das eigene Fahrzeug aber auch für den nachfolgenden Verkehr weiter verringert werden, indem nach einer ausgelösten Notbremsung die automatische Verzögerung nicht bis in den Stillstand fortgeführt wird, sondern bei Vorliegen bestimmter Lösebedingungen die Fahrzeugbremse wieder gelöst wird. Erfindungsgemäß kann die Kollisionsgefahr bzw. die Kollisionsschwere weiter verringert werden, indem bei einem Fahrzeug, das nicht zwingend eine Umfeldsensorik benötigt, die Lösebedingung aufgrund eines Bremsmodells berechnet wird, das sich aus einem hypothetisch nachfolgenden Fahrzeug mit charakteristischer Bewegung ergibt. Um dieses Modell weiter zu verbessern, kann der initiale Abstand eines hypothetisch nachfolgenden Fahrzeugs zum eigenen Fahrzeug bei Auslösung der automatischen Fahrzeugbremsung variabel gestaltet werden und an die Art der momentan befahrenen Straßenkategorie angepasst werden. Erfindungsgemäß wird dieses durch die Merkmale der unabhängigen Ansprüche gelöst.

Vorteilhafte Weiterbildungen und Ausgestaltungen ergeben sich aus den Unteransprüchen.

Dabei können aus den momentanen eigenen Fahrverhalten Fahrzeugdaten ermittelt werden, die in einem Speicher zwischengespeichert werden. Aus diesen zwischengespeicherten Fahrzeugdaten kann auf die Kategorie der momentan befahrenen Straße geschlossen werden, indem in Abhängigkeit der hieraus bestimmten Straßenkategorie ein Initialabstand bestimmt wird, der einen charakteristischen Abstand eines hypothetisch nachfolgenden Fahrzeugs zum Zeitpunkt der Auslösung der automatischen Bremsung angibt. Durch Anpassung dieses Initialabstands an die momentan befahrene Straßenkategorie wird weiterhin die Lösebedingung der Bremse nach erfolgter Erstkollision unter Verwendung dieses adaptierten Initialabstands bestimmt, wodurch die Kollisionsgefahr bzw. die Kollisionsschwere mit nachfolgenden Fahrzeugen verringert werden kann.

Unter dem Begriff Straßenkategorie wird im Rahmen der vorliegenden Erfindung die Art und bauliche Beschaffenheit der momentan befahrenen Straße verstanden. So kann die Straßenkategorie beispielsweise zwischen einer Autobahn, einer Landstraße oder auf Stadtverkehr innerhalb einer Ortschaft geschlossen werden und somit eine sehr genaue Annahme über die Art der momentan befahrenen Straße getroffen werden. Weiterhin ist es auch möglich, die Straßenkategorie zusätzlich oder alternativ dahingehend zu unterscheiden, ob es Gegenverkehr gibt, ob der Gegenverkehr auf baulich getrennten Fahrbahnen fährt, wie es beispielsweise bei Autobahnen der Fall ist, bei denen die beiden Fahrtrichtungen durch einen Grünstreifen und/oder Leitplanken getrennt sind.

Die Erfindung kann in vorteilhafter Weise weitergebildet werden, indem die momentan befahrene Straßenkategorie aus den abgespeicherten Fahrdaten bestimmt wird, indem die abgespeicherten Fahrdaten mit hinterlegten Mustern für jede Straßenkategorie verglichen werden. Weiterhin kann es vorteilhaft sein, wenn die Fahrdaten des Fahrzeugs aus einer oder mehreren der nachfolgenden Größen bestehen, die mittels fahrzeugeigenen Sensoren bestimmt werden. Dabei ist insbesondere die Eigengeschwindigkeit des eigenen Fahrzeugs zu nennen, es kann weiterhin die Fahrzeugbeschleunigung bzw. die Fahrzeugverzögerung des eigenen Fahrzeugs vorgesehen sein, die Beschleunigungs- bzw. Verzögerungshäufigkeit innerhalb einer gewissen Zeitdauer oder innerhalb einer vorbestimmten Fahrstrecke, es kann die Häufigkeit von Getriebeschaltvorgängen erfasst werden, es kann weiterhin die Häufigkeit von Lenkbewegungen erfasst werden sowie zusätzlich oder alternativ das Ausmaß der Lenkwinkeleinschläge erfasst werden. Durch das Erfassen einer oder mehrerer der vorgenannten Größen ist es möglich, die momentan befahrene Straßenkategorie wie Autobahn, Überlandstraße oder Stadtverkehr bzw. auf eine Straße mit Gegenverkehr oder eine Straße ohne Gegenverkehr geschlossen werden und damit auch auf das Fahrverhalten anderer Verkehrsteilnehmer im Fahrzeugumfeld geschlossen werden.

Weiterhin ist es vorteilhaft, dass die hinterlegten Muster zur Bestimmung der momentan befahrenen Straßenkategorie heuristisch ermittelt werden, indem typische Straßenkategorien abgefahren werden, die damit verbundenen Fahrzeugdaten gesammelt werden und hieraus Muster abgeleitet werden, die die Bestimmung der Straßenkategorie zulassen. Weiterhin ist es möglich, dass zur Bestimmung der momentan befahrenen Straßenkategorie zusätzlich Karteninformation eines Navigationssystems verwendet wird. Navigationssysteme sind in Fahrzeugen heute sehr weit verbreitet, wobei ein derartiges System über einen Empfänger verfügt, der die Bestimmung der momentanen Position ermöglicht, sowie weiterhin über abgespeicherte Karteninformation den momentanen Standort des eigenen Fahrzeugs bestimmen kann. Durch die Kenntnis des momentanen Standorts und die Information aus den Kartendaten über die Art der momentan befahrenen Straße kann die Bestimmung der Straßenkategorie mittels eines Navigationssystems zusätzlich plausibilisiert werden. Weiterhin ist es ebenso denkbar, dass aufgrund der Bestimmung der momentan befahrenen Straßenkategorie mittels eines Navigationssystems, die im Speicher hinterlegten Muster für die Straßenkategorie im Laufe der Zeit weiter individualisiert und/oder verfeinert werden können.

Die mittels fahrzeugeigenen Sensoren gesammelten Fahrdaten werden für einen gewissen Zeitraum bzw. für die Dauer einer gewissen, zurückgelegten Strecke im Fahrzeug abgespeichert, um hieraus einen Vergleich mit den hinterlegten Mustern durchführen zu können. Die Speicherung dieser Fahrzeugdaten erfolgt vorzugsweise mittels eines Ringspeichers, in den die erfassten Fahrzeugdaten fortlaufend angeschrieben werden und bei vollständiger Befüllung des Speichers die ältesten vorhandenen Daten durch neue überschrieben werden. Hieraus ergibt sich vorteilhaft, dass die im Speicher abgelegten Daten einem Messfenster zugeordnet werden können, das eine vorbestimmte Dauer oder eine vorbestimmte zurückgelegte Wegstrecke repräsentiert und immer die aktuellsten Daten enthält.

Weiterhin ist es vorteilhaft, dass die Aufzeichnungsrate des Speichers, in den die Fahrzeugdaten wie Eigengeschwindigkeit, Fahrzeugbeschleunigung, Beschleunigungshäufigkeit, Getriebeschalthäufigkeit, Häufigkeit von Lenkbewegungen und/oder Ausmaß der Lenkwinkeleinschläge eingeschrieben und gespeichert werden, veränderbar gestaltet ist. Dabei kann die Veränderung der Aufzeichnungsrate, also die Häufigkeit pro Zeiteinheit, in der Daten gespeichert werden, in Abhängigkeit der momentan bestimmten Straßenkategorie verändert werden. Dadurch ist es möglich, in Fahrsituationen, in denen sich keine schnellen Änderungen der Fahrzeugdaten ergeben, die Fahrzeugdaten nicht so häufig aufzeichnen bzw. in sich schnell ändernden Fahrsituationen, die sich typischerweise aufgrund der befahrenen Straßenkategorie ergeben, eine häufigere Aufzeichnungsrate vorgesehen sein. Weiterhin ist es auch denkbar, dass nur einige der aufgeführten Fahrzeugdaten in Abhängigkeit der momentan bestimmten Straßenkategorie verändert werden und andere Größen, die im Rahmen der Fahrzeugdaten ermittelt werden, mit einer Aufzeichnungsrate unabhängig der momentan bestimmten Straßenkategorie aufgezeichnet werden.

Besonders vorteilhaft ist es weiterhin, wenn das Fahrzeug zusätzlich eine Umfeldsensorik aufweist und es hierdurch möglich ist, Abstände und/oder Relativgeschwindigkeiten anderer Verkehrsteilnehmer zu ermitteln und dem erfindungsgemäßen Verfahren bereitzustellen. Derartige Umfeldsensoriken können für moderne Fahrerassistenzsysteme vorgesehen sein und aus einem Radarsensor, Lidarsensor oder Videosensor bestehen und beispielsweise Abstände und/oder Relativgeschwindigkeiten vorausbefindlicher oder hinterherfahrender Verkehrsteilnehmer oder Verkehrsobjekte bestimmen. Durch die Kenntnis der Abstände und/oder Relativgeschwindigkeiten anderer Verkehrsteilnehmer oder Vekehrsobjekte, selbst wenn diese nur im Fahrzeugvorfeld ermittelt werden, lassen eine genauere Bestimmung der momentan befahrenen Straßenkategorie zu und erlauben damit auch eine genauere Bestimmung des Abstands, eines hypothetisch nachfolgenden Verkehrsteilnehmers, ohne diesen direkt zu erfassen oder zu messen.

Von besonderer Bedeutung ist die Realisierung des erfindungsgemäßen Verfahrens in der Form eines Steuerelements, das für ein Steuergerät einer automatischen Notbremsfunktion eines Kraftfahrzeugs vorgesehen ist. Dabei ist auf dem Steuerelement ein Programm gespeichert, das auf einem Rechengerät, insbesondere auf einem Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Kurze Beschreibung der Zeichnungen

Nachfolgend werden Ausführungsbeispiele der Erfindung anhand von Zeichnungen erläutert. Es zeigen
- Figur 1: ein schematisches Ausführungsbeispiel der erfindungsgemäßen Vorrichtung,
- Figur 2: eine Darstellung einer typischen Verkehrssituation, die im Rahmen der vorliegenden Erfindung typischerweise auftreten kann und
- Figur 3: ein Ablaufdiagramm einer Ausführungsform des erfindungsgemäßen Verfahrens.

### Ausführungsformen der Erfindung

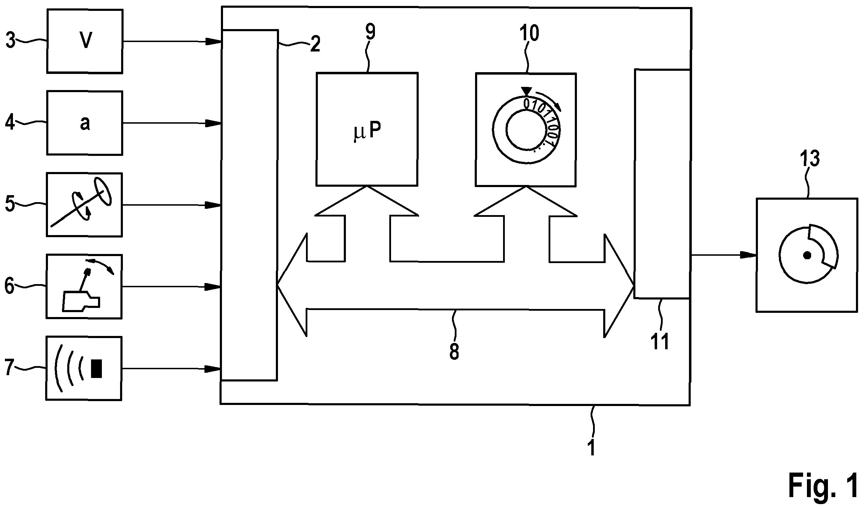

In Figur 1 ist die erfindungsgemäße Vorrichtung 1 zur Bestimmung des Initialabstands d₀ dargestellt. Der Vorrichtung 1 zur Bestimmung des Initialabstands d₀ werden mittels einer Eingangsschaltung 2 Fahrzeugdaten verschiedener, fahrzeuginterner Sensoren zugeführt, die im Rahmen des erfindungsgemäßen Verfahrens weiter ausgewertet werden. Dabei werden der Eingangsschaltung 2 Daten eines Geschwindigkeitssensors 3 zugeführt. Geschwindigkeitssensoren sind in allen Fahrzeugen vorhanden, da diese im Rahmen einer ABS- oder ESP-Regelung bzw. im Rahmen der Geschwindigkeitsdarstellung im Tachometer erfasst werden müssen. Weiterhin werden der Eingangsschaltung 2 Signale eines Beschleunigungssensors 4 zugeführt. Der Beschleunigungssensor 4 misst hierbei nicht nur Fahrzeugbeschleunigungen, sondern auch Fahrzeugverzögerungen und kann sowohl die Beschleunigungen und Verzögerungen in Fahrzeuglängsrichtung, wie auch die Beschleunigungen bzw. Verzögerungen in Fahrzeugquerrichtung ermitteln und weitergeben. Dabei wird nicht nur die Stärke der Beschleunigung, sondern auch die Häufigkeit und die Zeitdauer des Andauerns von Beschleunigungsvorgängen ausgewertet. Weiterhin werden der Eingangsschaltung 2 der Vorrichtung 1 Signale eines Lenkwinkelsensors 5 zugeführt. Der Lenkwinkelsensor 5 erfasst dabei die Drehbewegungen des Fahrers am Lenkrad und kann sowohl den Ausschlag, als auch die Häufigkeit erfassen und der erfindungsgemäßen Vorrichtung 1 zuführen. Weiterhin ist es denkbar, dass der Eingangsschaltung 2 der Vorrichtung 1 Signale eines Getriebesensors 6 zugeführt werden, wobei der Getriebesensor 6 die momentan eingelegte Getriebestufe erfassen kann, jedoch auch so ausgeprägt sein kann, dass die Häufigkeit der Getriebestufenwechsel, also die Schalthäufigkeit erfasst werden kann und der Eingangsschaltung 2 der Vorrichtung 1 zugeführt werden kann. Weiterhin kann es vorgesehen sein, dass der Eingangsschaltung 2 Signale einer Umfeldsensorik 7 zugeführt werden. Diese Umfeldsensorik 7 kann aus einem oder mehreren Radarsensoren, Lidarsensoren, Videosensoren oder Ultraschallsensoren bestehen, und beispielsweise im Rahmen einer im Fahrzeug verbauten Einparkhilfe oder adaptiven Abstands- und Geschwindigkeitsregelung vorgesehen sein. Dieser Umfeldsensor 7 bzw. diese Umfeldsensorik 7 umfasst Abstände und/oder Relativgeschwindigkeiten anderer Verkehrsteilnehmer und anderer Verkehrsobjekte, die sich innerhalb des Sensorerfassungsbereichs befinden. Dabei ist es möglich, dass es sich bei der Umfeldsensorik um einen Sensor handelt, der in Richtung Fahrzeugvorfeld ausgerichtet ist und beispielsweise für eine adaptive Fahrgeschwindigkeitsregelung vorgesehen ist. Die von den Sensoren 3 bis 7 zugeführten Messgrößen und Fahrzeugdaten werden über die Eingangsschaltung 2 der Vorrichtung 1 zur Bestimmung des Initialabstands zugeführt. Von der Eingangsschaltung 2 werden diese Daten mittels einer Datenaustauscheinrichtung 8, die insbesondere als Bussystem ausgestaltet sein kann, einer Speichereinrichtung 10 zugeführt. Diese Speichereinrichtung 10 kann vorteilhafterweise als Ringspeichereinrichtung ausgeführt sein, in der die Fahrzeugdaten der Reihenfolge nach eingeschrieben werden und sobald der Speicherplatz vollständig belegt ist, die ältesten Daten durch die neuen Daten überschrieben werden. Diese, in der Speichereinrichtung 10 gespeicherten Fahrzeugdaten, können wiederum über die Datenaustauscheinrichtung 8 an eine Berechnungseinrichtung 9, die beispielsweise als Mikroprozessor oder Signalprozessor ausgeführt sein kann, ausgelesen werden. In dieser Berechnungseinrichtung 9 können aus den Fahrzeugdaten charakteristische Werte der eigenen Fahrzeugbewegung ermittelt werden und diese ermittelten Werte mit charakteristischen Mustern, die in der Vorrichtung 1 zur Bestimmung des Initialabstands abgelegt sind, verglichen werden. Diese charakteristischen Muster können in der Vorrichtung 1 in einer weiteren, nicht dargestellten Speichereinrichtung, abgelegt sein oder können zu Beginn des erfindungsgemäßen Verfahrens in die Berechnungseinrichtung 9 geladen werden oder können in einem Teilbereich der Speichereinrichtung 10, der nicht zyklisch überschrieben wird, dauerhaft abgelegt sein. Aufgrund des Vergleichs der in der Vorrichtung 1 hinterlegten charakteristischen Muster mit den aus dem momentanen Fahrverhalten bestimmten Werten ist es möglich, auf die momentan befahrene Straßenkategorie zu schließen, indem herausgefunden wird, welches der hinterlegten charakteristischen Muster am besten mit den aus den momentanen Fahrdaten bestimmten Werten übereinstimmt. Hierdurch kann die Berechnungseinrichtung 9 mit hoher Wahrscheinlichkeit feststellen, ob sich das eigene Fahrzeug 15 momentan auf einer Autobahn oder autobahnähnlichen Schnellstraße bewegt, ob das eigene Fahrzeug 15 auf einer innerörtlichen Straße im Stadtverkehr unterwegs ist oder eine Überlandstraße befährt, bzw. auch ob die momentan befahrene Straßenkategorie direkt angrenzende Fahrbahnen für Gegenverkehr aufweist oder ob sich der Gegenverkehr auf baulich getrennten Fahrbahnen bewegt. Aufgrund der Bestimmung der momentan befahrenen Straßenkategorie kann ein angepasster Initialabstand d₀ bestimmt werden, der beispielsweise für jede hinterlegte Straßenkategorie abgespeichert ist.

Wird eine Erstkollision, an der das eigene Fahrzeug beteiligt ist, erkannt, so wird über einen aus dem Stand der Technik bekannten Algorithmus eine automatische Notbremsung ausgelöst. Eine derartige automatische Notbremsung wird üblicherweise mittels eines Bremsmodells durchgeführt, das weiterhin vorsehen kann, dass die automatische Fahrzeugverzögerung zu einem bestimmten Zeitpunkt selbstständig gelöst wird, und damit die Kollisionsschwere bzw. die Kollisionsgefahr für nachfolgende Fahrzeuge vermindert. Zur Auslösung dieser automatischen Notbremsung bzw. zum automatischen Lösen der Notbremsung kann die Berechnungseinrichtung 9 über die Datenaustauscheinrichtung 8 Steuersignale ausgeben, die über eine Ausgangsschaltung 11 an nachgeordnete Bremseinrichtungen 13 bzw. Bremssteuereinrichtungen 13 ausgegeben werden und die Fahrzeugverzögerungseinrichtungen entsprechend der Stellsignale betätigt werden.

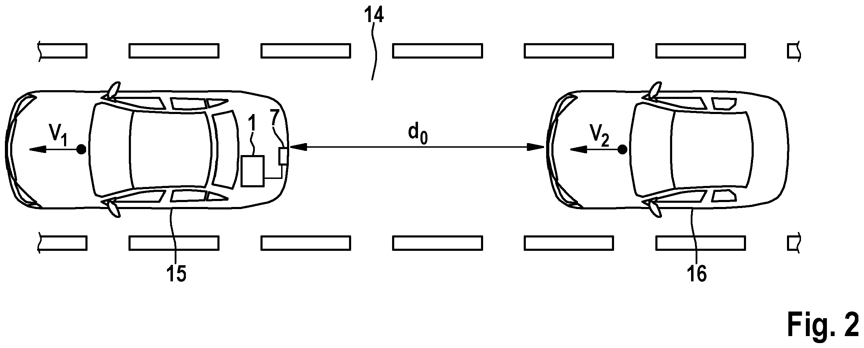

In Figur 2 ist eine beispielhafte Verkehrssituation dargestellt, um die Erfindung näher zu erläutern. Dabei ist eine Fahrbahn 14 aufgezeichnet, die durch linke und rechte Fahrspurmarkierungen begrenzt wird. Auf dieser Fahrspur 14 bewegt sich das mittels der erfindungsgemäßen Vorrichtung 1 ausgerüstete Fahrzeug 15, das sich mit der eigenen Fahrzeuggeschwindigkeit V₁ fortbewegt. Die Vorrichtung 1 zur Bestimmung des Initialabstands kann als Steuergerät im Fahrzeug 15 ausgeführt sein. Optional ist es möglich, dass eine Umfeldsensorik 7 vorgesehen ist, die, wie in Fig.2 abgebildet, am Fahrzeugheck des Fahrzeugs 15 angebracht ist und zusätzliche Abstandsdaten und Relativgeschwindigkeitsdaten anderer Verkehrsteilnehmer und Verkehrsobjekte erfasst und der erfindungsgemäßen Vorrichtung 1 zuführt. Es ist auch möglich, dass eine Umfeldsensorik 7 lediglich an der Fahrzeugfront des Fahrzeugs 15, beispielsweise im Rahmen einer adaptivem Abstandsregelung, angebracht ist und aus den nach vorne gemessenen Abstands- und/oder Relativgeschwindigkeitswerten auf charakteristische Abstandswerte des nachfolgenden Verkehrs geschlossen wird. Dem mittels der erfindungsgemäßen Vorrichtung 1 ausgerüsteten Fahrzeug 15 folgt ein weiteres, nachfolgendes Fahrzeug 16, das dem vorausfahrenden Fahrzeug 15 mit der Fahrzeuggeschwindigkeit V₂ folgt. Dabei ist der Abstand, mit dem sich das nachfolgende Fahrzeug 16 hinter dem vorausfahrenden Fahrzeug 15 hinterher bewegt, als d₀ bezeichnet. Sollte keine Umfeldsensorik 7 vorgesehen sein oder eine Umfeldsensorik 7, die an der Fahrzeugfront des vorausfahrenden Fahrzeugs 15 befestigt ist, so kann der Abstand d₀ nicht direkt bestimmt werden, so dass der Abstand d₀ und die Geschwindigkeit V₂ des nachfolgenden Fahrzeugs 16 hypothetisch angenommen wird.

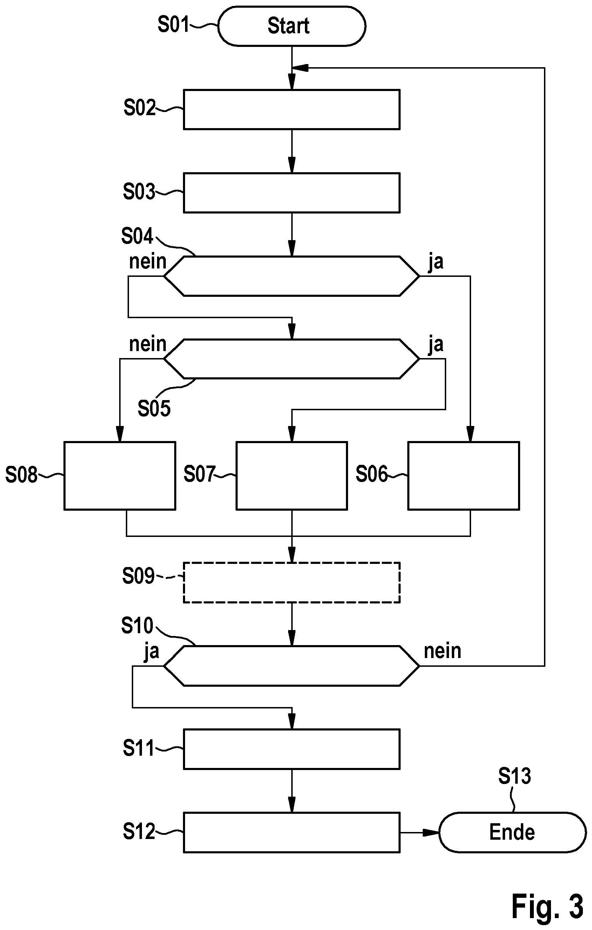

In Figur 3 ist ein Ablaufdiagramm dargestellt, das in der Berechnungseinrichtung 9 der erfindungsgemäßen Vorrichtung 1 abläuft und geeignet ist, die Verzögerungseinrichtungen 13 so zu betätigen, dass das Kollisionsrisiko bzw. die Kollisionsschwere nach einer Erstkollision weiter minimiert wird. Das erfindungsgemäße Verfahren startet im Schritt S01, was beispielsweise mit Betätigung der Zündung des Fahrzeugs 15 geschehen kann oder mit Aktivierung eines Ein-/Ausschalters eines entsprechenden Systems geschehen kann. Im folgenden Schritt S02 werden Fahrzeugdaten von Fahrzeugsensoren 3 bis 7 ermittelt und über die Eingangsschaltung 2 und die Datenaustauscheinrichtung 8 in einen Ringspeicher 10 geschrieben. Durch die Ausführung der Speichereinrichtung 10 als Ringspeicher ist gewährleistet, dass immer die aktuellsten Fahrzeugdaten eines gleitenden Messfensters bereitgestellt werden. Aus den in Schritt S02 eingelesenen Fahrzeugdaten wird im nachfolgenden Schritt S03 ein momentanes Muster aus Fahrzeugdaten erzeugt. Dabei werden Fahrzeuggrößen wie die Fahrzeuggeschwindigkeit ausgewertet, es kann die Häufigkeit von Fahrzeugbeschleunigungen bzw. Fahrzeugverzögerungen sowie deren Amplitude berücksichtigt werden, es kann weiterhin vorgesehen sein, dass ein Lenkwinkelsensorsignal hinsichtlich des Ausmaßes der Lenkbewegung und/oder hinsichtlich der Häufigkeit der Lenkbewegungen ausgewertet wird sowie dass ein Getriebesignal ausgewertet wird, das die momentan eingelegte Gangstufe erkennt und/oder die Häufigkeit von Gangstufenwechseln erfasst. Wurde aus den momentan zur Verfügung stehenden Fahrzeugdaten das momentane Muster bestimmt, so wird im darauffolgenden Schritt S04 geprüft, ob das momentane Muster mit einem in der Vorrichtung 1 hinterlegten Muster für Stadtverkehr übereinstimmt. Besteht eine sehr hohe Übereinstimmung zwischen dem momentan bestimmten Muster und dem hinterlegten Muster für Stadtverkehr, so verzweigt Schritt S04 nach "ja" und wird in Schritt S06 fortgeführt. Ist die Übereinstimmung in Schritt S04 nicht sehr hoch oder unterhalb eines vorbestimmten Schwellenwertes, so verzweigt Schritt S04 nach "nein" und das Verfahren wird in Schritt S05 fortgeführt, in dem weiter geprüft wird, ob das momentane Muster aus aktuellen Fahrzeugdaten mit dem in der Vorrichtung 1 hinterlegten Muster für Autobahnverkehr übereinstimmt. Wird in Schritt S05 eine hohe Übereinstimmung zwischen dem momentanen Muster und dem für den Autobahnverkehr hinterlegten Muster erkannt, so verzweigt Schritt S05 nach "ja" und das Verfahren wird in Schritt S07 fortgeführt. Wird hingegen in Schritt S05 festgestellt, dass die Übereinstimmung zwischen dem momentanen Muster und dem hinterlegten Muster für Autobahnverkehr gering ist bzw. unterhalb eines weiteren, vorbestimmten Schwellenwertes liegt, so verzweigt Schritt S05 nach "nein" und das Verfahren wird in Schritt S08 fortgeführt. In den Schritten S06, S07 und S08 wird nun jeweils ein Initialabstand d₀ bestimmt, der für die erkannte Straßenkategorie typisch ist und für das weitere Verfahren Verwendung findet. Wurde in Schritt S04 erkannt, dass das Fahrzeug sich momentan mit hoher Wahrscheinlichkeit im Stadtverkehr befindet, so wird in Schritt S06 ein Initialabstand d₀ für Stadtverkehr in den Algorithmus eingelesen. Wurde im Schritt S05 festgestellt, dass sich das Fahrzeug mit sehr hoher Wahrscheinlichkeit auf einer Autobahn oder einer autobahnähnlichen Schnellstraße bewegt, so wird im Schritt S07 ein Initialabstand d₀ für Autobahnverkehr in den Algorithmus geladen und weiter verwendet. Wurde in den Schritten S04 und S05 jeweils festgestellt, dass sich das Fahrzeug mit hoher Wahrscheinlichkeit weder im Stadtverkehr noch auf der Autobahn bewegt, so wird darauf geschlossen, dass sich das Fahrzeug auf einer Landstraße bewegt und es wird in Schritt S08 ein Initialabstand d₀ für Überlandverkehr in den Algorithmus geladen. Die Abstände d₀ für die jeweilige Straßenkategorie sind hierbei charakteristische Abstandswerte, die in der Vorrichtung 1 hinterlegt sind und je nach erkannter Straßenkategorie ausgelesen werden. Nach Bestimmung des Initialabstands d₀ in Abhängigkeit der momentan befahrenen Straßenkategorie in einem der Schritte S06, S07 oder S08 wird das erfindungsgemäße Verfahren in Schritt S10 fortgeführt.

Optional kann vor Schritt S10 ein Schritt S09 vorgesehen sein, in dem bei Vorhandensein eines Navigationssystems im vorausfahrenden Fahrzeug 15 aufgrund der momentan festgestellten Position und deren Übereinstimmung in der Karteninformation, die mittels des Mustervergleichs bestimmte Straßenkategorie zusätzlich plausibilisiert werden kann. Hierzu ist es notwendig, dass in der Karteninformation Zusatzinformation enthalten ist, um welche Straßenkategorie es sich bei der momentan befahrenen Route handelt. Dieser optionale Schritt S09 zur Plausibilisierung der befahrenen Straßenkategorie ist nicht zwingend notwendig und kann bei Fahrzeugen ohne Navigationssystem entfallen, wobei die Bestimmung der Straßenkategorie dann allein aufgrund der Entscheidungen der Schritte S04 und S05 erfolgt.

Im folgenden Schritt S10 wird ermittelt, ob eine Erstkollision des eigenen Fahrzeugs 15 mit einem weiteren Verkehrsteilnehmer erfolgt ist. Im Normalfall wird diese Prüfung in Schritt S10 negativ ausfallen, da keine Erstkollision stattfand und Schritt S10 verzweigt daraufhin nach "nein", woraufhin das Verfahren zu Schritt S02 zurückkehrt und die beschriebenen Verfahrensschritte iterativ von neuem durchläuft. Wurde in Schritt S10 eine Erstkollision mit einem weiteren Verkehrsteilnehmer festgestellt, so verzweigt Schritt S10 nach "ja" und es wird im darauffolgenden Schritt S11 eine automatische Notbremsung eingeleitet, indem die Verzögerungseinrichtungen 13 des Fahrzeugs 15 durch die Vorrichtung 1 entsprechend angesteuert werden. Zur Reduktion der Kollisionsgefahr oder der Kollisionsschwere mit mögliche nachfolgenden Fahrzeugen kann die automatische Notbremsung, die in Schritt S11 eingeleitet wurde, durch kontrolliertes Lösen der Verzögerungseinrichtungen automatisch beendet wird, indem in Schritt S12 eine Bremsöffnung stattfindet, sofern ein momentan berechnetes Bremsmodell unter Verwendung des passenden Initialabstands d₀ ergibt, dass die Kollisionsschwere durch eine Bremsöffnung weiter verringert werden kann.

Bezüglich des Bremsmodells soll hierbei auf die Offenbarung der Offenlegungsschrift DE 10 2007 019 991 verwiesen werden, in der dieses Modell beschrieben wurde und deren Offenbarungsinhalt von der vorliegenden Anmeldung vollumfänglich miterfasst werden soll.
Wurde in Schritt S12 festgestellt, dass eine Bremsöffnung zur Reduktion der Kollisionsschwere geeignet ist, wobei der Initialabstand d₀, der an die momentane Straßenkategorie angepasst ist, verwendet wurde, wird das erfindungsgemäße Verfahren in Schritt S13 beendet.

## Patentansprüche

1. Verfahren zur Vermeidung einer möglichen Folgekollision bzw. zur Verringerung der Unfallfolgen einer Kollision, indem nach erfolgter Erstkollision des Fahrzeugs (15) mit einem weiteren Verkehrsteilnehmer ein automatischer Bremseingriff durch ein Fahrzeugsicherheitssystem (1) gemäß einem Bremsmodell gelöst wird, **dadurch gekennzeichnet, dass** aus dem eigenen Fahrverhalten Fahrzeugdaten ermittelt werden, die ermittelten Fahrzeugdaten in einem Speicher (10) zwischengespeichert werden, aus den zwischengespeicherten Fahrzeugdaten auf die Kategorie der momentan befahrenen Straße (14) geschlossen wird, in Abhängigkeit der bestimmten Straßenkategorie (14) ein Initialabstand (d₀) bestimmt wird und die Lösebedingung der Bremse unter Verwendung dieses Initialabstands ermittelt wird.

2. Verfahren nach Anspruch 1, **dadurch gekennzeichnet, dass** die Bestimmung der momentan befahrenen Straßenkategorie (14) aus den abgespeicherten Fahrdaten erfolgt, indem die abgespeicherten Fahrdaten mit hinterlegten Mustern für jede Straßenkategorie verglichen werden.

3. Verfahren nach Anspruch 1 oder 2, **dadurch gekennzeichnet, dass** als Straßenkategorien (14) mindestens eine der Kategorien Stadtverkehr (S06) und/oder Überlandverkehr (S07) und/oder Autobahnverkehr (S08) vorgesehen ist, insbesondere eine Kombination aus diesen Kategorien vorgesehen ist.

4. Verfahren nach Anspruch 2 oder 3, **dadurch gekennzeichnet, dass** die Straßenkategorie (14) zusätzlich unterscheidet, ob die momentan befahrene Straße Gegenverkehr aufweist oder keinen Gegenverkehr aufweist.

5. Verfahren nach einem der vorhergehenden Ansprüche, **dadurch gekennzeichnet, dass** die hinterlegten Muster für die Straßenkategorien (14) aus heuristisch ermittelten Fahrdaten, insbesondere aus den eigenen Fahrdaten, bestimmt werden.

6. Verfahren nach einem der vorhergehenden Ansprüche, **dadurch gekennzeichnet, dass** zur Bestimmung der momentan befahrenen Straßenkategorie (14) zusätzlich Karteninformation eines Navigationssystems (S09) verwendet wird.

7. Verfahren nach einem der vorhergehenden Ansprüche, **dadurch gekennzeichnet, dass** die Fahrdaten aus
- der Eigengeschwindigkeit des Fahrzeugs (v₁),
- den Fahrzeugbeschleunigungen bzw. Fahrzeugverzögerungen des Fahrzeugs (a),
- der Beschleunigungs- bzw. Verzögerungshäufigkeit,
- der Häufigkeit von Getriebeschaltvorgängen,
- der Häufigkeit von Lenkbewegungen,
- dem Ausmaß der Lenkwinkeleinschläge oder
- einer Kombination hieraus
bestehen.

8. Verfahren nach einem der vorhergehenden Ansprüche, **dadurch gekennzeichnet, dass** zu den Fahrdaten zusätzlich Daten von einer Umfeldsensorik (7) ermittelt und verarbeitet werden, wobei die Umfeldsensorik (7) Abstände (d) und/oder Relativgeschwindigkeiten (vᵣₑₗ) weiterer Verkehrsteilnehmer (16) ermittelt und bereitstellt.

9. Verfahren nach einem der vorhergehenden Ansprüche, **dadurch gekennzeichnet, dass** die Speicherung der Daten in einem Ringspeicher (10) erfolgt.

10. Verfahren nach einem der vorhergehenden Ansprüche, **dadurch gekennzeichnet, dass** die Aufzeichnungsrate des Speichers (10) in Abhängigkeit der momentan bestimmten Straßenkategorie (14) veränderbar ist.

11. Vorrichtung zur Vermeidung einer möglichen Folgekollision bzw. zur Verringerung der Unfallfolgen einer Kollision, indem die Vorrichtung eine Erstkollision Erstkollision des Fahrzeugs (15) mit einem weiteren Verkehrsteilnehmer erkennen kann und nach erfolgter Erstkollision eine Verzögerungseinrichtung (13) durch die Vorrichtung (1) automatisch gemäß einem Bremsmodell gelöst wird, **dadurch gekennzeichnet, dass** der Vorrichtung (1) Fahrzeugdaten von Fahrzeugsensoren (3, 4, 5, 6, 7) zugeführt werden, die zugeführten Fahrzeugdaten in einem Speicher (10) der Vorrichtung (1) zwischengespeichert werden, aus den zwischengespeicherten Fahrzeugdaten mittels einer Verarbeitungseinrichtung (9) auf die Kategorie der momentan befahrenen Straße (14) geschlossen wird, und in Abhängigkeit der bestimmten Straßenkategorie (14) ein in der Vorrichtung gespeicherter Initialabstand ausgelesen wird und die Vorrichtung die Lösebedingung der Verzögerungseinrichtung (13) unter Verwendung dieses Initialabstands (d₀) ermittelt und an die Verzögerungseinrichtung (13) ausgibt.

12. Vorrichtung nach Anspruch 11, **dadurch gekennzeichnet, dass** der Vorrichtung Daten einer Umfeldsensorik (7) zugeführt werden, wobei die Umfeldsensorik (7) Abstände (d) und/oder Relativgeschwindigkeiten (vᵣₑₗ) weiterer Verkehrsteilnehmer (16) ermittelt und bereitstellt.

## Claims

1. Method for avoiding a possible subsequent collision and for reducing the consequences of an accident resulting from a collision by releasing an automatic braking intervention by a vehicle safety system (1) according to a braking model after an initial collision between the vehicle (15) and a further road user, **characterized in that** vehicle data are determined from the vehicle's own driving behaviour, the determined vehicle data are buffered in a memory (10), the category of the road (14) currently being driven along is inferred from the buffered vehicle data, an initial distance is determined on the basis of the determined road category (14), and the condition for releasing the brake is determined using this initial distance (d₀).

2. Method according to Claim 1, **characterized in that** the road category (14) currently being driven along is determined from the stored driving data by comparing the stored driving data with stored patterns for each road category.

3. Method according to Claim 1 or 2, **characterized in that** at least one of the following categories is provided as road categories (14): urban traffic (S06) and/or cross-country traffic (S07) and/or motorway traffic (S08), in particular a combination of these categories.

4. Method according to Claim 2 or 3, **characterized in that** the road category (14) additionally distinguishes whether the road currently being driven along has or does not have two-way traffic.

5. Method according to one of the preceding claims, **characterized in that** the stored patterns for the road categories (14) are determined from heuristically determined driving data, in particular from the vehicle's own driving data.

6. Method according to one of the preceding claims, **characterized in that** map information from a navigation system (S09) is additionally used to determine the road category (14) currently being driven along.

7. Method according to one of the preceding claims, **characterized in that** the driving data comprise
- the vehicle's own speed (v₁),
- the vehicle accelerations or vehicle decelerations of the vehicle (a),
- the acceleration or deceleration frequency,
- the frequency of gear shift operations,
- the frequency of steering movements,
- the extent of the steering lock angles, or
- a combination thereof.

8. Method according to one of the preceding claims, **characterized in that** data from an environmental sensor system (7) are determined and processed in addition to the driving data, wherein the environmental sensor system (7) determines and provides distances (d) and/or relative speeds (vᵣₑₗ) of further road users (16) .

9. Method according to one of the preceding claims, **characterized in that** the data are stored in a ring memory (10).

10. Method according to one of the preceding claims, **characterized in that** the recording rate of the memory (10) can be changed on the basis of the currently determined road category (14).

11. Apparatus for avoiding a possible subsequent collision and for reducing the consequences of an accident resulting from a collision by virtue of the apparatus being able to detect an initial collision between the vehicle (15) and a further road user and the apparatus (1) automatically releasing a deceleration device (13) according to a braking model after the initial collision, **characterized in that** vehicle data from vehicle sensors (3, 4, 5, 6, 7) are supplied to the apparatus (1), the supplied vehicle data are buffered in a memory (10) of the apparatus (1), the category of the road (14) currently being driven along is inferred from the buffered vehicle data by means of a processing device (9), and an initial distance (do) stored in the apparatus is read out on the basis of the determined road category (14), and the apparatus determines the condition for releasing the deceleration device (13) using this initial distance (do) and outputs it to the deceleration device (13).

12. Apparatus according to Claim 11, **characterized in that** data from an environmental sensor system (7) are supplied to the apparatus, wherein the environmental sensor system (7) determines and provides distances (d) and/or relative speeds (vᵣₑₗ) of further road users (16).

## Revendications

1. Procédé pour éviter une éventuelle collision en chaîne ou pour diminuer les conséquences d'un accident en déclenchant un freinage automatique par un système de sécurité du véhicule (1) conformément à un modèle de freinage après que la collision initiale du véhicule (15) avec un autre usager de la route a eu lieu, **caractérisé en ce que** des données de véhicule sont déterminées à partir du comportement de conduite, les données de véhicule déterminées sont temporairement stockées dans une mémoire (10), la catégorie de la route actuellement empruntée (14) est établie à partir des données de véhicule stockées temporairement, une distance initiale (do) est déterminée en fonction de la catégorie de route déterminée (14) et l'état de relâchement du frein est déterminé sur la base de ladite distance initiale (do).

2. Procédé selon la revendication 1, **caractérisé en ce que** la catégorie de route actuellement empruntée (14) est déterminée à partir des données de déplacement stockées en comparant les données de déplacement stockées à des profils stockés pour chaque catégorie de route.

3. Procédé selon la revendication 1 ou 2, **caractérisé en ce qu'**au moins l'une des catégories de trafic urbain (S06) et/ou de trafic interurbain (S07) et/ou de trafic autoroutier (S08) est prévue en tant que catégorie de route (14), et ce qu'il est en particulier prévu une combinaison desdites catégories.

4. Procédé selon la revendication 2 ou 3, **caractérisé en ce que** la catégorie de route (14) distingue en outre si la route actuellement empruntée présente un trafic venant en sens inverse ou ne présente pas de trafic venant en sens inverse.

5. Procédé selon l'une des revendications précédentes, **caractérisé en ce que** les profils stockés pour les catégories de routes (14) sont déterminés à partir de données de déplacement déterminées de manière heuristique, en particulier à partir des données de déplacement propres.

6. Procédé selon l'une des revendications précédentes, **caractérisé en ce que** des informations cartographiques d'un système de navigation (S09) sont en outre utilisées pour déterminer la catégorie de route actuellement empruntée (14).

7. Procédé selon l'une des revendications précédentes, **caractérisé en ce que** les données de déplacement comprennent
- la vitesse propre du véhicule (v₁),
- les accélérations ou les décélérations du véhicule (a),
- la fréquence d'accélération ou de décélération du véhicule,
- la fréquence des opérations de changement de vitesse,
- la fréquence des mouvements de direction,
- la valeur des sauts d'angle de direction ou
- une combinaison de ceux-ci.

8. Procédé selon l'une des revendications précédentes, **caractérisé en ce que** des données provenant d'un système de capteurs d'environnement (7) sont déterminées et traitées en plus des données de déplacement, dans lequel le système de capteurs d'environnement (7) détermine et fournit des distances (d) et/ou des vitesses relatives (Vᵣₑₗ) d'autres usagers de la route (16).

9. Procédé selon l'une des revendications précédentes, **caractérisé en ce que** le stockage des données est effectué dans un tampon circulaire (10).

10. Procédé selon l'une des revendications précédentes, **caractérisé en ce que** la cadence d'enregistrement dans la mémoire (10) peut être modifiée en fonction de la catégorie de route actuellement déterminée (14).

11. Dispositif pour éviter une éventuelle collision en chaîne ou pour diminuer les conséquences d'un accident, en faisant en sorte que le dispositif puisse détecter une collision initiale entre le véhicule (15) et un autre usager de la route et qu'un dispositif de décélération (13) soit automatiquement déclenché par le dispositif (1) après que la collision initiale a eu lieu conformément à un modèle de freinage, **caractérisé en ce que** des données de véhicule provenant de capteurs de véhicule (3, 4, 5, 6, 7) sont envoyées au dispositif (1), les données de véhicule envoyées sont temporairement stockées dans une mémoire (10) du dispositif (1), la catégorie de la route actuellement empruntée (14) est établie à partir des données de véhicule stockées temporairement au moyen d'un dispositif de traitement (9), et une distance initiale stockée dans le dispositif est lue en fonction de la catégorie de route déterminée (14) et le dispositif détermine la condition de déclenchement du dispositif de décélération (13) sur la base de ladite distance initiale (do) et la délivre au dispositif de décélération (13).

12. Dispositif selon la revendication 11, **caractérisé en ce que** des données d'un système de capteurs d'environnement (7) sont délivrées au dispositif, dans lequel le système de capteurs d'environnement (7) détermine et fournit des distances (d) et/ou des vitesses relatives (vᵣₑₗ) d'autres usagers de la route (16).
